# EUROPEAN PATENT APPLICATION

(11) **EP 0 971 275 A1**
(43) Date of publication of application: **12.01.2000**
(21) Application number: 98112501.6
(22) Date of filing: 06.07.1998
(51) Int. Cl.: G05B 19/042

(54) **Method to perform a scheduled action of network devices**

(71) Applicant: Sony International (Europe) GmbH, 50829 Köln (DE)
(72) Inventor: Schwager, Andreas, c/o SONY Internat.(Europe) GmbH, 70736 Fellbach (DE)
(74) Representative: Hoffmann, Jörg Peter, Dr. Ing.

(57) **Abstract**

The present invention offers a method to perform a scheduled action of devices (3, 4) that are connected via a network by calculating an individual triggering time for every device (3, 4) that should perform a predetermined action at a predetermined time. This individual triggering time is calculated based on the synchronous start time of said respective scheduled action and an individual start-up time of the respective device (3, 4) participating in said scheduled action.

## Description

This invention concerns a method to perform a scheduled action of devices that are connected via a network.

Usually in consumer electronics home networks, e.g. an IEEE 1394 based home network, a clock device triggers all other devices. All devices receive this trigger command at the same time and should start at the same time.

Scheduled action in the contents of the present invention always means that predetermined actions of predetermined devices should be performed synchronous at a predetermined time.

Normally a network, like a home network, comprises different devices and due to their individual constructions every device needs a different start-up time. E.g. a VCR mechanic has to move the tape into position or a tuner has to move the dish to the desired satellite and to tune to the transponder. Therefore, in the conventional home network every device will start its action at a different time and therefore the invoking application will not be started synchronously at all devices and also not exactly at the predetermined time.

Therefore, it is the object of the present invention to offer a method to perform a scheduled action of devices that are connected via a network with a synchronous start according to the invoking application.

The inventive method to perform a scheduled action of the devices that are connected via a network is characterized in that an individual triggering time is calculated for every device that should perform a predetermined action at a predetermined time.

Due the calculation of not one triggering time for all devices participating in the scheduled action like in the prior art, but of an individual triggering time for every device all different start-up times of the individual devices are taken into account and it is possible to start a predetermined action of a predetermined device really at a predetermined time and not at said predetermined time plus the start-up time of the respective device.

Advantageous embodiments of the present invention as defined in independent claim 1 are respectively defined in dependent claims 2 to 11.

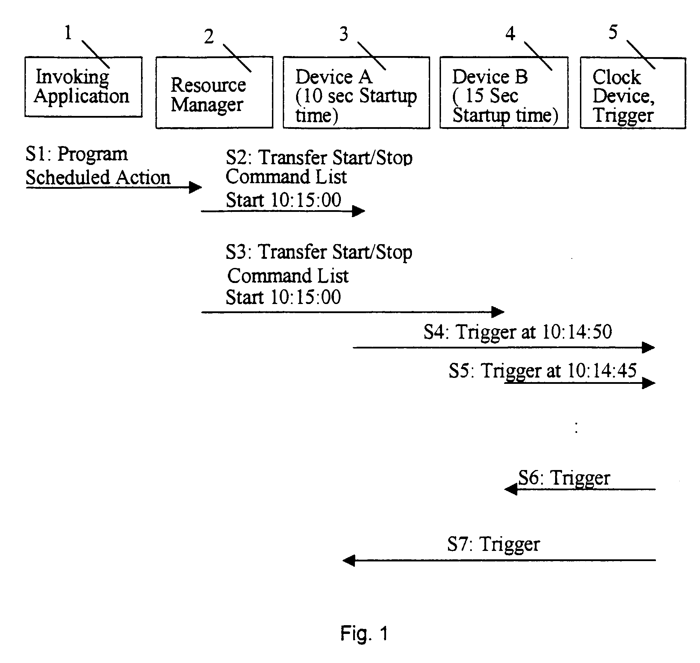

One exemplatory advantageous embodiment of the present invention will be described in detail below with reference to Fig. 1 which illustrates one specific embodiment of the present invention and shows the messages between different network devices that are exchanged according to the invention to perform a scheduled action of several devices so that the invoking application is started simultaneously at all participating devices.

An invoking application 1 programs the resource manager 2 that is present in the network with a scheduled action in a first step S1. Such an invoking application 1 can e.g. be based on an user command to record a predetermined program that can be received by a tuner present in the network with a VCR also present in said network. The invoking application 1 programs the tuning of the tuner to said predetermined program at a predetermined time and the starting of the VCR-recording at said predetermined time into the resource manager 2 as well as the switching-off of the tuner and the VCR simultaneously after the program has been recorded.

In the following steps, here steps S2 and S3 the resource manager 2 transfers the respective start/stop command list and said predetermined time to the various devices that are needed for the respective programmed scheduled action. In the shown example the start time 10:15:00 is transferred together with the individual start/stop command list to device A 3 that has a start-up time of 10 seconds in step S2 and together with the individual start/stop command list to device B 4 that has a start-up time of 15 seconds in step S3. device A 3 can e.g. be a VCR whose mechanic needs 10 seconds to move the loaded tape into the correct position and the device B 4 could be a tuner that needs 15 seconds to move its dish to the desired satellite and to tune its transponder.

The individual start-up time is dependent on the respective device. According to the present invention, it is also possible that one device has different start-up times for different actions to be performed. After a respective device receives the start/stop command list that describes the predetermined action to be performed the device can look up the start-up time needed for this action in a look-up table that can be based on the worst case start-up times of the respective device or it can determine the start-up time on the basis of the current state of the respective device, e.g. how far a tuner has to move its satellite dish depending on the current position. It is also possible that the start-up time is generated on a combination of the worst case start-up time and the current state of the respective device. The setting of a too high start-up time is not desirable, since several scheduled actions with only small time differences at one device might then more easily conflict.

When a device has received a start/stop command list and a predetermined time at which the command described in the start/stop command list should be executed or cancelled and has generated its individual start-up time for this respective command it calculates an individual triggering time at which it should be triggered to have enough time to prepare itself and start exactly at the time the scheduled action should start. Therefore, the individual start-up time is subtracted from the predetermined time of the scheduled action which is then transmitted to a clock device 5 of the network which serves as a trigger. In the shown example, the device A 3 transmits its individual triggering time 10:14:50 in step S4 to the clock device 5 and the device B 4 transmits its individual triggering time 10:14:45 in step S5 to the clock device 5.

In the following the clock device 5 triggers the device B 4 in a step S6 at the time it has been programmed to trigger said device B 4 and in a step S7 at a time it has been programmed to trigger said device A 3. Therefore, every device A 3 and B 4 is triggered at an individual time so that it has enough time to prepare itself and start exactly at the time the respective scheduled action should start.

Of course, it is also possible that the individual triggering times are not calculated by every device A 3 or B 4 itself, but by the clock device 5 or by another device provided therefore in the network. Therefore, the clock device 5 or the other device has to know the individual start-up time of the respective devices or of the respective commands that should be executed in the respective devices and the predetermined time that is set for the scheduled action. The functionality of the other device can also be included in the recource manager 2.

It is also possible that every device has an internal clock to trigger its device at its individual triggering time. In this case every internal clock device has to be somehow synchronized with the clock device 5 of the network.

As can be seen from the above exemplatory embodiment of the present invention, the resource manager 2 does not directly instruct the clock device 5 by himself. Every device A 3, B 4 knows its own start-up time, e.g. the worst case start-up time, and instructs the clock device 5 for the individual triggering command that is calculated according to the predetermined time at which the scheduled action should take place and the individual start-up time of the respective device or the respective command of the respective device. The general triggering command according to the prior art is individually preset with the start-up time of a respective device so that the device has enough time to prepare itself and start exactly at the time the scheduled action should take place after reception of the triggering command. Such an individually preset triggering command is generated for every involved device.

The present invention is preferably executed in a home network in which it is desired by the user that various actions should take place at exactly the same time, e.g. the tuner of the home network has to receive a desired program at exactly the time the user whishes to record said program with a VCR and vice versa the VCR has to start its recording at exactly the same time the program begins. Preferably, such a home network is a 1394 based home network.

## Claims

1. Method to perform a scheduled action of devices (3, 4) that are connected via a network, **characterized in that** an individual triggering time is calculated for every device (3, 4) that should perform a predetermined action at a predetermined time.

2. Method according to claim 1, **characterized in that** said individual triggering time is calculated based on the synchronous start time of said scheduled action and an individual start-up time that the respective device (3, 4) needs to perform said predetermined action.

3. Method according to claim 1 or 2, **characterized in that** the individual start-up time a respective device (3, 4) needs to perform said predetermined action is determined on the basis of the worst case start-up time the respective device (3, 4) needs to perform said predetermined action.

4. Method according to anyone of claims 1 to 3, **characterized in that** the individual start-up time a respective device (3, 4) needs to perform said predetermined action is determined on the basis of the current state of the respective device (3, 4).

5. Method according to anyone of claims 1 to 4, **characterized in that** a resource manager (2) of the network respectively transmits said predetermined action and said predetermined time of said scheduled action to each device (3, 4) that should perform said predetermined action at said predetermined time.

6. Method according to anyone of claims 1 to 5, **characterized in that** every device (3, 4) calculates its individual triggering time itself.

7. Method according to claim 6, **characterized in that** every device (3, 4) sets an internal clock with the calculated individual start-up time that triggers said device (3, 4) at its individual triggering time.

8. Method according to claim 6, **characterized in that** every device (3, 4) transmits said triggering time to a clock device (5) of the network.

9. Method according to anyone of claims 1 to 4, **characterized in that** a resource manager (2) of the network respectively transmits said predetermined action and said predetermined time of said scheduled action for every device (3, 4) that should perform said predetermined action at said predetermined time to a clock device (5) of the network or an other device in the network and respectively said predetermined action to the respective device (3, 4), and every device (3, 4) that should perform said predetermined action at said predetermined time transmits its individual start-up time needed to perform the predetermined action to said clock device (5) or to that other device.

10. Method according to claim 9, **characterized in that** said clock device (5) or that other device calculates the individual triggering time for every device (3, 4).

11. Method according to claim 10, **characterized in that** said other device transmits its calculated triggering times for every device (3, 4) to said clock device (5).

12. Method according to anyone of claims 9 to 11, **characterized in that** said other device can also be the recource manager (2).

13. Method according to anyone of claims 8 to 12, **characterized in that** said clock device (5) triggers said device (3, 4) at its individual triggering time.

14. Method according to anyone of claims 1 to 13, **characterized in that** said network is a home network.

15. Method according to anyone of claims 1 to 14, **characterized in that** said network is a 1394 based network.

16. Method according to anyone of claims 1 to 15, **characterized in that** said device (3, 4) is a consumer electronic device.
